# EUROPÄISCHE PATENTSCHRIFT

(11) **EP 3 908 544 B1**
(45) Veröffentlichungstag und Bekanntmachung des Hinweises auf die Patenterteilung: **27.03.2024**
(21) Anmeldenummer: 19829065.2
(22) Anmeldetag: 13.12.2019
(51) Int. Cl.: E02F 3/08, B65G 65/06, B65G 65/28, E02F 3/14

(54) **BÖSCHUNGSRÄUMUNGSSYSTEM EINES MISCHBETTES UND VERFAHREN ZUM BETREIBEN EINES BÖSCHUNGSRÄUMUNGSSYSTEMS**
SLOPE CLEARING SYSTEM OF A BLENDING BED AND METHOD FOR OPERATING A SLOPE CLEARING SYSTEM
SYSTÈME DE DÉBLAIEMENT D'UN LIT MIXTE ET PROCÉDÉ POUR FAIRE FONCTIONNER UN SYSTÈME DE DÉBLAIEMENT

(30) Priorität: 09.01.2019 DE 102019200174
(43) Veröffentlichungstag der Anmeldung: 17.11.2021
(73) Patentinhaber: thyssenkrupp Polysius GmbH, 59269 Beckum (DE); thyssenkrupp AG, 45143 Essen (DE)
(72) Erfinder: SCHOLZ, Guido, 48291 Telgte (DE)
(74) Vertreter: thyssenkrupp Intellectual Property GmbH
(86) Internationale Anmeldenummer: PCT/EP2019/085149
(87) Internationale Veröffentlichungsnummer: WO 2020/143998

(56) Entgegenhaltungen:
- DE-A1- 3 602 938
- DE-A1-102004 019 450
- DE-B1- 2 909 272

## Beschreibung

Die Erfindung betrifft ein Böschungsräumungssystem eines Mischbetts, insbesondere eines Rundmischbetts und ein Verfahren zum Betreiben eines Böschungsräumungssystems eines Mischbetts, insbesondere eines Rundmischbetts, zum Abbau von Schüttgut einer Schüttguthalde.

In vielen industriellen Verfahren, wie beispielsweise in der Zementindustrie, kommt es bei der Herstellung von Produkten entscheidend auf die Gleichmäßigkeit der eingesetzten Rohstoffe an. Hierfür werden vielfach Schüttguthalden eingesetzt, mit denen ein Mischen und Homogenisieren des Schüttgutes ermöglicht wird. Beispielsweise wird das Schüttgut mittels des Chevcon-Verfahrens schichtweise in Form einer vorzugsweise teilkreisringförmigen Halde aufgeschüttet, wobei die Schüttguthalde insbesondere eine Vielzahl von Schichten unterschiedlichen Materialien aufweist. Zum Abbau des Schüttguts kommen sogenannte Böschungsräumungssysteme zum Einsatz, die beispielsweise ein Rechen oder einen Rückladeausleger vorsehen, der zum Abtragen des Schüttguts in Eingriff mit einer Anschnittfläche der Schüttguthalde kommt. Der Abbau des Schüttguts von der Schüttguthalde basiert auf dem Prinzip, dass das Schüttgut durch Aktivierungselemente eines Rechens oder eines Rückladeauslegers aktiviert wird und schwerkraftbedingt von der Halde rutscht. An dem Fuß der Halde wird das Schüttgut anschließend üblicherweise von einem Kettenkratzer abtransportiert. Ein Kettenkratzer für ein Lager ist beispielsweise aus der DE 10 2007 063 067 A1 bekannt. Ein System, welches den Oberbegriff von Anspruch 1 sowie Anspruch 7 offenbart, ist aus der DE3602938 A1 bekannt.

Aufgrund der sich wandelnden Kundenanforderungen werden Mischbetten häufig für Premix (Kalkstein-Ton-Gemische) eingesetzt. Hervorgerufen durch den Tonanteil und relative hohe Feuchte des Materials verschlechtern sich jedoch die Handhabungseigenschaften des Schüttgutes erheblich, da dieses zum Verkleben und zur Klumpenbildung neigt. Die Aktivierung des Materials mit einem Rechen wird erschwert und das aktivierte Material rutscht unter Umständen nicht zum Haldenfuß und muss erneut aktiviert werden. Dies führt dazu, dass die pro Zeiteinheit maximal ausstapelbare Materialmenge begrenzt ist. Zudem kommt es bei der Übergabe des Schüttgutes vom Böschungsräumer zum Kettenkratzer zu Materialanstauungen.

Der Abbau solcher schwer fließender Materialien führt aufgrund der höheren Aktivierungskräfte häufig zu einem Ausfall der Aktivierungselemente beispielsweise des Rechens.

Davon ausgehend ist es Aufgabe der vorliegenden Erfindung, ein Böschungsräumungssystem eines Rundmischbetts zum Abbau von Schüttgut einer Schüttguthalde anzugeben, wobei insbesondere schwer fließende Materialien beim Abbau mit möglichst geringem Aufwand homogenisiert werden.

Diese Aufgabe wird erfindungsgemäß durch eine Vorrichtung mit den Merkmalen des unabhängigen Verfahrensanspruchs 1 und mit den Merkmalen des unabhängigen Vorrichtungsanspruchs 7 gelöst. Vorteilhafte Weiterbildungen ergeben sich aus den abhängigen Ansprüchen.

Ein Verfahren zum Betreiben eines Böschungsräumungssystem eines Mischbettes, insbesondere eines Rundmischbetts zum Abbau von Rohmaterialien einer teilkreisförmigen Schüttguthalde, die eine Stirnfläche aufweist, umfasst nach einem ersten Aspekt das Transportieren des Schüttguts mittels einer an einer vertikalen Zentralsäule angebrachten Fördereinrichtung, vorzugweise direkt, in Richtung der Zentralsäule, wobei die Fördereinrichtung eine Mehrzahl von an einem umlaufenden Transportmittel angebrachten Förderelementen aufweist. Die Förderelemente greifen zum Abbau des Schüttguts in die Stirnfläche der Schüttguthalde ein und die Fördereinrichtung wird entlang der Stirnfläche der Schüttguthalde bewegt. Das Schüttgut wird vorzugsweise ausschließlich mittels der Fördereinrichtung in Richtung der Zentralsäule transportiert, wobei auf zusätzliche Mittel zur Förderung des Materials verzichtet wird.

Ein Mischbett, insbesondere ein Rundmischbett, weist ein Böschungsräumungssystem zum Abbau des Schüttguts der Schüttguthalde auf. Zum Einstapeln des Schüttguts als Schüttguthalde weist das Mischbett vorzugsweise einen Ausleger auf, der insbesondere eine Fördereinheit, wie beispielsweise ein Förderband, aufweist, um das Schüttgut auf der Schüttguthalde oder dem Boden abzusetzen. Der Ausleger ist beispielsweise an dem oberen Endbereich der Zentralsäule um die Mittelachse der Zentralsäule rotierbar angebracht, wobei die Fördereinrichtung des Böschungsräumungssystems am unteren Endbbereich der Zentralsäule angebracht ist. Bei dem Transportmittel handelt es sich beispielsweise um eine Kette, an der die Förderelemente angebracht sind. Das Transportmittel ist um eine zumindest teilweise in vertikaler Richtung weisende Achse umlaufend angebracht.

Die Schüttguthalde des Mischbetts, insbesondere eines Rundmischbetts, ist vorzugsweise teilkreisringförmig ausgebildet und weist eine radial einwärts und eine radial auswärts weisende Seitenfläche auf, sowie eine Stirnfläche, die in Umfangsrichtung der Schüttguthalde weist und eine Abbaufläche bildet, an der das Schüttgut mittels des Böschungsräumungssystems abgebaut wird. Nach dem ersten Anschnitt einer neu aufgeschütteten Halde wird durch den Abbauprozess eine Abbaufläche erzeugt die in den weiteren Ausführungen als Stirnfläche beschrieben wird. Diese Stirnfläche erstreckt sich sowohl in horizontaler als auch in vertikaler Richtung in einem Winkel β zur Horizontalen von beispielsweise 20°- 45°, insbesondere 30°-40°, vorzugsweise etwa 37°.

Eine Bewegung der Fördereinrichtung entlang der Stirnfläche ermöglicht einen Abbau des Schüttguts über die gesamte Stirnfläche, wobei das Schüttgut beim Abbau von der Stirnfläche bereits in Richtung der Zentralsäule abtransportiert wird. Dadurch wird auch beispielsweise klebriges Material, das zur Klumpenbildung neigt, zuverlässig und gleichmäßig von der Schüttguthalde abgebaut. Des Weiteren wird durch den Abbau des Schüttguts an der Stirnseite der Schüttguthalde eine Homogenisierung des Schüttguts erreicht. Zum Abbau des Schüttguts von der Schüttguthalde wird die Fördereinrichtung des Böschungsräumungssystems an der Stirnseite der Schüttguthalde positioniert, vorzugsweise derart dass die Fördereinrichtung, insbesondere Förderelemente der Fördereinrichtung, in die Oberfläche der Stirnfläche eingreifen. Das Transportmittel der Fördereinrichtung rotiert, sodass sich die Förderelemente umlaufend bewegen und das Schüttgut in Richtung der Zentralsäule transportiert wird. Gleichzeitig wird die Fördereinrichtung entlang der Stirnfläche bewegt, vorzugsweise bis die Fördereinrichtung an der Spitze der Stirnfläche angelangt ist. An der Spitze der Stirnfläche wird die Bewegungsrichtung der Fördereinrichtung umgekehrt und diese wird in Richtung des Bodens des Mischbetts entlang der Stirnfläche bewegt. Vorzugsweise steht die Fördereinrichtung in beiden oder nur in einer der Bewegungsrichtungen mit der Stirnfläche im Eingriff, sodass Schüttgut in beiden oder nur in einer der beiden Bewegungsrichtungen der Fördereinrichtung abgebaut wird.

Gemäß einer ersten Ausführungsform wird die Fördereinrichtung entlang der vertikalen und horizontalen Erstreckung der Stirnfläche der Schüttguthalde bewegt. Vorzugsweise wird die Fördereinrichtung entlang der gesamten Stirnfläche der Schüttguthalde bewegt. Die Bewegung der Fördereinrichtung erfolgt vorzugsweise derart, dass von der Stirnfläche Material abgetragen und die Stirnfläche beispielsweise im Urzeigersinn bzw. gegen den Urzeigersinn abgebaut wird. Vorzugsweise erfolgt der Materialabbau kontinuierlich wodurch eine Homogenisierung des Schüttguts beim Abbau realisiert wird. Insbesondere wird die Fördereinrichtung derart entlang der Stirnfläche bewegt, dass die Stirnfläche einen Winkel zur Horizontalen von beispielsweise 20°- 45°, insbesondere 30°-40°, vorzugsweise etwa 37° aufweist. Die Fördereinrichtung wird insbesondere in einem Winkel gamma 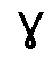 von beispielsweise 20°- 45°, insbesondere 30°-40°, vorzugsweise etwa 37° zur Horizontalen vorzugsweise kontinuierlich entlang der Stirnfläche bewegt. Vorzugsweise wird die Geschwindigkeit der Bewegung der Fördereinrichtung im oberen Bereich der Stirnfläche, insbesondere in Richtung der Spitze der Schüttguthalde, erhöht. Vorzugsweise wird die Geschwindigkeit in Abhängigkeit des Winkels γ derart angepasst, dass mit kleiner werdendem Winkel γ die Bewegungsgeschwindigkeit erhöht wird. Dies ermöglicht es, eine möglichst konstante Menge an Schüttgut von der Schüttguthalde abzubauen.

Gemäß einer weiteren Ausführungsform bildet die Mittelachse der Zentralsäule eine Rotationsachse zur Rotation der Fördereinrichtung. Die Rotationsachse der Fördereinrichtung spannt vorzugsweise mit der der Längsachse der Fördereinrichtung einen Anstellwinkel γ auf, wobei der Anstellwinkel 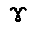 der Fördereinrichtung zur Rotationsachse bei der Bewegung der Fördereinrichtung entlang der Stirnfläche einstellbar ist. Beispielsweise wird der Anstellwinkel 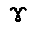 der Fördereinrichtung kontinuierlich angepasst. Vorzugsweise wird der Anstellwinkel bei der Bewegung, insbesondere Rotationsbewegung, der Fördereinrichtung derart eingestellt, insbesondere kontinuierlich verändert, dass er dem Verlauf der Stirnfläche der Schüttguthalde entspricht und die Bewegung der Fördereinrichtung über die Erstreckung der Stirnfläche vorzugsweise parallel zur Stirnfläche erfolgt. Vorzugsweise wird während eines Bewegungszyklus der Fördereinrichtung ein Segment mit einer, abhängig vom Abstand zur Rotationsachse der Zentralsäule, konstanten Schnitttiefe zur Stirnfläche abgebaut. Insbesondere wird bei der Bewegung entlang der Stirnfläche eine Schicht der Schüttguthalde abgetragen. Die Schüttgutschicht, welche von der Stirnfläche während eines Bewegungszyklus der Fördereinrichtung abgetragen wird, hat beispielsweise über die horizontale Erstreckung der Stirnfläche die Form eines Kreisbogenausschnittes. Folglich wird die teilkreisförmige Halde in Richtung der aufgeschütteten Halde abgebaut. Abhängig von der Lage der Halde erfolgt der Abbau beispielsweise im Uhrzeiger oder gegen den Uhrzeigersinn. Der Anstellwinkel 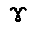 weist beispielsweise etwa 30 - 120°, vorzugsweise 35 - 100°, insbesondere 40° -95° auf.

Die Fördereinrichtung führt zum Abbau des Schüttguts an der Stirnfläche der Schüttguthalde gemäß einer weiteren Ausführungsform gleichzeitig eine Rotation um die Rotationsachse und eine Schwenkbewegung um eine zu der Rotationsachse vorzugsweise orthogonale Schwenkachse aus. Es ist ebenfalls denkbar, dass die Schwenkachse in einem Winkel von 0 - 120°, vorzugsweise 60 - 100°, insbesondere 80° zu der Rotationsachse angeordnet ist. Die Schwenkachse und die Rotationsachse kreuzen sich vorzugsweise außerhalb der Zentralsäule. Der Winkel zwischen der Rotationsachse und der Schwenkachse ist vorzugsweise einstellbar, insbesondere stufenlos. Die Kombination einer Rotations- und einer Schwenkbewegung der Fördereinrichtung ermöglicht eine gleichmäßige und kontinuierliche Bewegung der Fördereinrichtung entlang der Stirnfläche der Schüttguthalde.

Die Förderelemente weisen gemäß einer weiteren Ausführungsform jeweils eine Schnittkannte auf, die beim Abbau des Schüttguts in die Stirnfläche der Schüttguthalde eingreift. Gemäß einer weiteren Ausführungsform greift zumindest ein Förderelement derart in die Stirnfläche der Schüttguthalde ein, dass die Schnittkannte des Förderelements einen Winkel zur Horizontalen aufweist, der geringer ist als der Böschungswinkel der Schüttguthalde. Die Schnittkanten des Förderelements zur Horizontalen weisen vorzugsweise einen Winkel β von etwa 20°- 45°, vorzugsweise 30° - 40°, insbesondere 37° auf, wobei der Winkel vorzugsweise stufenlos einstellbar ist. Vorzugsweise weist das Förderelement zwei Schnittkanten auf, wobei die zweite Schnittkante einen größeren Winkel zur Horizontalen als die erste Schnittkante aufweist und insbesondere in die Bewegungsrichtung der Fördereinrichtung weist. Die zweite Schnittkante ist derart angeordnet, dass bei einer Bewegung der Fördereinrichtung in Richtung Haldenspitze ein sanfter Übergang der Böschung erreicht wird. Unter der Bewegungsrichtung der Fördereinrichtung ist die Richtung zu verstehen, in der sich die Fördereinrichtung entlang der Stirnfläche bewegt, wobei die Förderelemente zusätzlich mittels des Transportmittels in Förderrichtung bewegt werden.

Der Winkel β den die Schnittkante des Förderelements mit der horizontalen aufspannt ist vorzugsweise einstellbar. Hierdurch ist es möglich das Böschungsräumersystem auf sich verändernde Schüttguteigenschaften einzustellen. Die Einstellbarkeit wird beispielsweise realisiert durch eine Einstellbarkeit des Winkels der Schwenkachse der Fördereinrichtung zur Horizontalen. Vorzugweise umfasst der Einstellbereich für den Winkel β +/- 10°. Insbesondere +/-7°.

Die Erfindung umfasst auch ein Böschungsräumungssystem eines Mischbetts zum Abbau von Schüttgut an einer Stirnfläche einer Schüttguthalde aufweisend eine sich im Wesentlichen vertikal erstreckende Zentralsäule, eine Fördereinrichtung zum Transport von Schüttgut in Richtung der Zentralsäule, die mit einem Ende an der Zentralsäule angebracht ist und eine Mehrzahl von Förderelementen aufweist und wobei die Förderelemente an einem umlaufenden Transportmittel angebracht sind, das sich entlang der Fördereinrichtung erstreckt. Die Förderelemente sind derart an dem Transportmittel angebracht, dass sie zum Abbau des Schüttguts in die Stirnfläche der Schüttguthalde eingreifen und die Fördereinrichtung entlang der Stirnfläche der Schüttguthalde bewegbar angebracht ist.

Die mit Bezug auf das Verfahren zum Betreiben eines Böschungsräumungssystems beschriebenen Vorteile treffen in Vorrichtungsgemäßer Entsprechung auch auf das Böschungsräumungssystem zu.

Die Fördereinrichtung ist gemäß einer Ausführungsform derart an der Zentralsäule angebracht, dass sie entlang der vertikalen und horizontalen Erstreckung der Stirnfläche der Schüttguthalde bewegbar ist.

Die Fördereinrichtung ist gemäß einer weiteren Ausführungsform derart an der Zentralsäule angebracht, dass sie zum Abbau des Schüttguts an der Stirnfläche der Schüttguthalde gleichzeitig um die Rotationsachse rotierbar und um eine zu der Rotationsachse orthogonale Schwenkachse schwenkbar ist.

Gemäß einer weiteren Ausführungsform weist jedes Förderelement eine Schnittkante zum Eingriff in eine Stirnfläche der Schüttguthalde auf, wobei die Schnittkannte einen Winkel β zur Horizontalen von etwa 20°- 45°, vorzugsweise 30° - 40°, insbesondere 37° aufweist.

Die Schnittkante eines Förderelements weist gemäß einer weiteren Ausführungsform einen Winkel zur Horizontalen auf, der geringer ist als der Böschungswinkel der Schüttguthalde.Gemäß einer weiteren Ausführungsform sind die Förderelemente als Schaufeln oder Eimer zur Aufnahme von Schüttgut ausgebildet. Vorzugsweise erstrechen sich die Förderelemente im Wesentlichen orthogonal zu der Mittelachse der Fördereinrichtung. Schaufeln oder Eimer ermöglichen einen zuverlässigen und einfachen Transport des Schüttguts von der Stirnfläche.

Zumindest ein Förderelement weist gemäß einer weiteren Ausführungsform einen in Förderrichtung des Schüttguts weisenden Bereich und einen orthogonal zur Förderrichtung des Schüttguts weisenden Bereich auf. Das Förderelement weist gemäß einer weiteren Ausführungsform zwei Schnittkanten auf, die in einem Winkel zwischen 10° und 30° zueinander angeordnet sind.

Insbesondere wird das wird das Böschungsräumungssystem betrieben während die teilkreisförmige Halde über den Ausleger eingestapelt wird. Vorzugsweise wird durch das gleichzeitige Einstapeln von Schüttguts ein kontinuierlicher Betrieb des Böschungsräumungssystems ermöglicht.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung eines Böschungsräumungssystems in einer perspektivischen Ansicht gemäß einem Ausführungsbeispiel.
- Fig. 2: zeigt eine schematische Darstellung eines Förderelements in einer Schnittansicht gemäß einem Ausführungsbeispiel.
- Fig. 3: zeigt eine schematische Darstellung eines Förderelements in einer perspektivischen Ansicht.

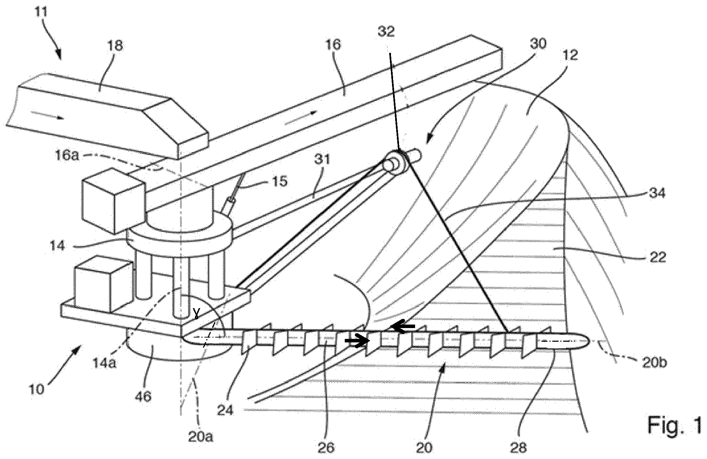

In Fig. 1 ist ein Mischbett 11, insbesondere ein Rundmischbett, mit einem Böschungsräumungssystem 10 zum Abbau von Schüttgut einer Schüttguthalde 12 dargestellt. Das Böschungsräumungssystem 10 ist in einem Lagerplatz zum Ein- und Ausspeichern von Schüttgut, wie beispielsweise einem Rundlager zur Aufnahme eines Rundmischbetts an Schüttgut angeordnet. Bei einem Rundmischbett ist eine Schüttguthalde 12 mit einer im Wesentlichen teilkreisförmigen Haldenkuppe, die vorzugsweise eben abfallende Seitenhänge auf dem Lagerboden aufgeschüttet. Das Böschungsräumungssystem 10 des Mischbetts 11 weist eine Zentralsäule 14 auf, die sich in vertikaler Richtung erstreckt und um eine Rotationsachse 14a rotierbar angeordnet ist. Die Rotationsachse 14a bildet die Mittelache der Zentralsäule 14. An dem unteren Ende ist die Zentralsäule 14 fest mit dem Boden beispielsweise eines Lagers verbunden. An dem oberen Endbereich der Zentralsäule 14 ist ein Ausleger 16 angebracht, der sich im Wesentlichen in horizontaler Richtung erstreckt. Der Ausleger 16 ist beispielhaft orthogonal zu der Zentralsäule 14 angeordnet und an dieser vorzugsweise schwenkbar um eine Schwenkachse 16a angebracht, sodass eine Rotation des Auslegers 16 um die Zentralsäule 14 und eine Schwenkbewegung um die Schwenkachse 16a möglich ist. Die Schwenkachse 16a ist vorzugsweise orthogonal zu der Rotationsachse 14a angeordnet. Beispielhaft wird der Ausleger 16 über einen mit der Zentralsäule 14 verbundenen Hydraulikzylinder 15 abgestützt und um die Schwenkachse 16a verschwenkt.

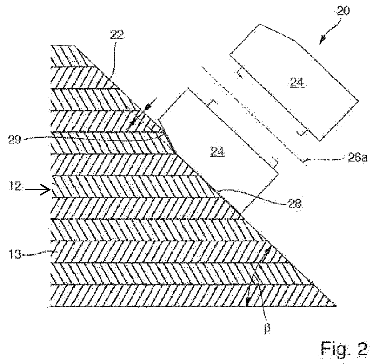

Der Ausleger 16 weist eine Fördereinheit, wie beispielsweise ein Förderband, zum Fördern von Schüttgut und Absetzen des Schüttguts auf der Schüttguthalde 12 oder dem Lagerboden auf. Das Abwurfende der Fördereinheit des Auslegers 16 ist derart ausgerichtet, dass das Schüttgut von dem Abwurfende des Auslegers 16 auf die Schüttguthalde 12 fällt. Das Einstapeln des Schüttguts in dem Lagerplatz erfolgt vorzugsweise nach dem Chevcon-Verfahren, wobei das Schüttgut schichtweise mittels des Auslegers 16 auf die Schüttguthalde und/ oder den Boden des Mischbetts abgesetzt wird. Während des Absetzens des Schüttguts rotiert der Ausleger 16 vorzugsweise um die Rotationsachse 14a der Zentralsäule 14. Das auf diese Weise eingestapelte Schüttgut liegt in Umfangsrichtung der Schüttguthalde verlaufenden Schichten 13 (Fig. 2) vor, sodass ein Abbau der Stirnfläche durch das Böschungsräumungssystem 10 zu einer homogenisierung des Materials führt.

Das Schüttgut wird vorzugsweise von einer weiteren Bandfördereirichtung 18 zum Rundmischbett 11 transportiert und auf den Ausleger 16 aufgegeben. Vorzugsweise stützt sich die Bandfördereinrichtung 18 auf der Zentralsäule ab.

Bei dem Schüttgut handelt es sich insbesondere um Kalkstein, Erze, Kohle, Sand, Tone oder ähnliche mineralische Gesteine.

Das Böschungsräumungssystem 10 weist eine am unteren Ende der Zentralsäule 14 drehbar angebracht Fördereinrichtung 20 zum Abbau von Schüttgut auf, sodass eine Rotation der Fördereinrichtung 20 um die Rotationsachse 14a der Zentralsäule möglich ist. Die Fördereinrichtung 20 erstreckt sich in Fig. 1 beispielhaft im Wesentlichen im horizontaler Richtung vorzugsweise in einem Winkel 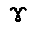 zur Rotationsachse 14a von etwa 30 - 120°, vorzugsweise 35 - 100°, insbesondere 40° -95°. Die Fördereinrichtung 20 ist durch diese beiden rotatorischen Freiheitgrade derart angeordnet, dass sie entlang der Stirnfläche 22 der Schüttguthalde 12 bewegt werden kann. Die Schwenkachse 20a ist in diesem Ausführungsbeispiel in einem Winkel zur Horizontalen von 37° angeordnet. Vorzugsweise beträgt der Winkel der Schwenkachse zur Horizontalen zwischen 0° und 40°. Insbesondere ist die Schwenkachse 20a zu der Rotationsachse 14a orthogonal angeordnet.

Die Schüttguthalde 12 eines in Fig. 1 dargestellten Rundmischbetts 11 ist zumindest teilkreisringförmig um die Zentralsäule 14 aufgeschüttet. Die radial nach innen oder außen weisenden Oberflächen der Schüttguthalde 12 bilden die Seitenflächen der Schüttguthalde 12, wobei die in Umfangsrichtung weisende Oberfläche die Stirnfläche 22 der Schüttguthalde 12 bildet. Die Schüttguthalde 12 wird in Umfangsrichtung abgebaut, wobei Material von der Stirnfläche 22 abgetragen wird. Die Fördereinrichtung 20 umfasst eine Mehrzahl von Förderelementen 24, die mit der Stirnfläche 22 der Schüttguthalde 12 zum Abbau des Schüttguts zusammenwirken. Die Fördereinrichtung 20 umfasst des Weiteren ein umlaufendes Transportmittel 26, wie beispielsweise eine Kette, an dem die Förderelemente 24 befestigt sind. Die Förderelemente 24 sind beispielsweise als Bleche, eimerförmig oder schaufelförmig ausgebildet und vorzugsweise im Wesentlichen gleichmäßig zueinander beabstandet entlang der Erstreckung der Fördereinrichtung 20, insbesondere an dem Transportmittel 26 angebracht. Das Transportmittel 26 ist beispielsweise an zumindest zwei in Fig. 1 nicht dargestellten Umlenkrollen geführt, die sich vorzugsweise jeweils an einem Endbereich der Fördereinrichtung 20 befinden. Das Transportmittel 26 rollt über die Umlenkrollen ab, wobei jede Umlenkrolle eine Umlenkrollenachse 26a aufweist, welche vorzugsweise die Mittelachse der Umlenkrolle ausbildet und um welche die Umlenkrolle rotiert. Die Umlenkrollenachse 26a ist beispielsweise in Fig. 2 gezeigt und erstreckt sich zumindest teilweise in vertikaler Richtung. Darunter ist vorzugsweise ein Winkel zur Vertikalen von etwa 0°-45° zu verstehen. Vorzugsweise weißt die Umlenkrollenachse 26a einen kleineren oder den gleichen Winkel zur Vertikalen auf wie die Schwenkachse 20a der Fördereinrichtung 20. Jedes der Förderelemente 24 weist eine Schnittkante 28 auf, die mit der Stirnfläche 22 der Schüttguthalde 12 zum Abbau des Schüttguts im Eingriff steht. Die Schnittkante 28 des Förderelements 24 weist daher in Richtung der Stirnfläche 22 der Schüttguthalde 22. Die Förderelemente 24 erstrecken sich vorzugsweise seitlich des Transportmittels 26 der Fördereinrichtung 20. Insbesondere erstrecken sich die Förderelemente 24 von dem Transportmittel 26 aus in horizontaler Richtung vorzugsweise in Umfangsrichtung der teilkreisringförmigen Schüttguthalde 12.

Die Fördereinrichtung 20 ist zusätzlich über ein Befestigungsmittel 30 an der Zentralsäule 14 angebracht. Das Befestigungsmittel 30 umfasst beispielhaft einen Tragarm 31 mit einem Seilzug, der eine an dem Tragarm 31 angebrachte Umlenkrolle 32 und ein Seil 34 aufweist. Der Tragarm 31 ist insbesondere an der Zentralsäule 14 befestigt. Mittels des Befestigungsmittels 30 wird die Fördereinrichtung 20 beispielsweise angehoben und abgesenkt. Mittels des Befestigungsmittels 30 ist vorzugsweise der Anstellwinkel 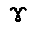 der Längsachse 20b der Fördereinrichtung 20 zur Rotationsachse 14a der Zentralsäule 14 einstellbar. Beispielsweise umfasst das Befestigungsmittel 30 ein Seilzug, der an der Fördereinheit 20 und beispielsweise an dem Tragarm 31 der Zentralsäule 14 angebracht ist. Der Seilzug umfasst beispielsweise ein Seil 34, das jeweils mit einem Ende an dem vorderen, in Richtung der Stirnfläche 22 der Schüttguthalde 12 weisenden Ende der Fördereinrichtung 20, und mit dem anderen Ende an der Zentralsäule 14 angebracht und mit Hilfe des Tragarms 31 über die Umlenkrolle 32 geführt wird. Die Hubarbeit, zum Schwenken der Fördereinrichtung 20 wird, vorzugsweise durch einen nicht dargestellten elektrischen Antrieb realisiert.

An der Zentralsäule 14, insbesondere um diese herum, ist eine Zentralschurre zum Abführen des mittels der Fördereinrichtung 20 in Richtung der Zentralsäule 14 transportierten Schüttguts. Beispielsweise wird das Schüttgut mittels der Zentralschurre 46 auf ein beispielsweise unterhalb des Lagerbodens verlaufendes Förderband zum Abtransport aus dem Lager geleitet.

Im Betrieb des Böschungsräumungssystems 10 des Mischbettes 11 wird die Fördereinrichtung 20 an der Stirnfläche 22 der Schüttguthalde 12 angeordnet. Das Transportmittel 26 rotiert um die Umlenkrollenachsen 26a in der in Fig. 1 angegebenen Richtung, wobei die Förderelemente 24 auf der der Stirnfläche 22 der Schüttguthalde 12 zugewandten Seite der Fördereinrichtung 20 sich in Richtung der Zentralsäule 14 bewegen und auf der gegenüberliegenden Seite der Fördereinrichtung 20 von der Zentralsäue 14 weg. Die sich in Richtung der Zentralsäule 14 bewegenden der Stirnfläche 22 zugewandten Förderelemente 24 stehen mit ihrer Schnittkante 28 mit dem Schüttgut der Stirnfläche 22 im Eingriff, sodass Schüttgut von der Schüttguthalde entfernt und mit den Förderelementen 24 in Richtung der Zentralsäule 14 bewegt wird. Vorzugsweise handelt es sich bei den Förderelementen 24 um Schaufeln, die Schüttgut aufnehmen oder Bleche, die Schüttgut in Richtung der Zentralsäule 14 schieben.

Zum Abbau des Schüttguts von der Schüttguthalde 12 wird die Fördereinrichtung 20 entlang der Stirnfläche 22 der Schüttguthalde 12 bewegt, wobei der Anstellwinkel 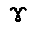 der Fördereinrichtung 20 mittels des Befestigungsmittels 30 vorzugsweise kontinuierlich geändert wird, sodass sich die Fördereinrichtung 20 vorzugsweise kontinuierlich entlang der Stirnfläche 22 bewegt, wobei insbesondere eine stirnseitige Abbaufläche entsteht. Die Fördereinrichtung 20 wird vorzugsweise kontinuierlich entlang der horizontalen und vertikalen Erstreckung der Stirnfläche 22 bewegt. Die Abbaufläche, insbesondere die Stirnfläche 22, wird vorzugsweise so durch die Fördereinrichtung 20 bearbeitet, dass eine Fläche entsteht die eine geringere Steigung aufweist als der natürliche Böschungswinkel des Materials. Hierdurch wird ein spontanes zusammenbrechen der Schüttung in der Abbaufläche der Stirnfläche 22 effizient vermieden. Ein zusammenbrechen der Schüttung führt beispielsweise zu einer Beschädigung des Böschungsräumungssystems 11 und zu einer Überfüllung optionaler nachfolgender Förderaggregate. Abhängig von der Ausrichtung der Schwenkachse 20a der Fördereinrichtung 20 wird die Schwenkbewegung der Fördereinrichtung 20 mit einer Rotationsbewegung um die Rotationsachse 14a der Zentralsäule 14 kombiniert, um die gewünschte Kontur der Abbaufläche der Stirnfläche 22 zu erzeugen. Insbesondere wird die Bewegungskinematik der Fördereinrichtung 20 so gewählt, dass Schwankungen des geförderten Volumenstroms minimiert werden.

Der Schüttgutabbau an der Stirnfläche 22 der Schüttguthalde 12 sorgt in Kombination mit dem Aufbau des Schüttguts für eine Homogenisierung des Schüttguts. Insbesondere durch die kontinuierliche Bewegung der Fördereinrichtung 20 in Richtung und/ oder entlang der Stirnfläche 22 der Schüttguthalde 12 wird die Stirnfläche der Schüttguthalde abgetragen und eine Homogenisierung des beispielsweise schichtweise aufgeschütteten Schüttguts erreicht. Dadurch wird ein Abbau des Schüttguts ausschließlich mittels der Fördereinrichtung 20 ohne zusätzliche Hilfsmittel zum Homogenisieren, wie beispielsweise Rechen oder weitere Fördereinrichtungen ermöglicht.

Fig. 2 zeigt die Fördereinrichtung 20 mit zwei Förderelementen 24. Die Förderelemente 24 weisen jeweils eine Schnittkante 28 auf, die zum Abbau des Schüttguts in der Stirnfläche 22 der Schüttguthalde 12 eingreift. Die in Fig. 2 in Richtung der Stirnfläche 22 der Schüttguthalde 12 weisenden Schneidkante 28 des Förderelements 28 weist einen Winkel β zur Horizontalen auf der beispielsweise 20°- 45°, insbesondere 30°-40°, vorzugsweise etwa 37° beträgt. Insbesondere ist der Winkel der Schneidkante 28 zur Horizontalen geringer als der Böschungswinkel des Schüttguts, vorzugsweise der seitlichen Flächen und der Stirnfläche 22 der Schüttguthalde 12. Unter dem Böschungswinkel des Schüttguts 12 ist der Winkel zu verstehen, bei welchem das Schüttgut aufgrund von Reibungs- und Kohäsionskräften gerade noch zusammengehalten wird. Eine Steigung der Schüttguthalde 12, die den Böschungswinkel übersteigt, führt beispielsweise zu einem spontanen Abbruch des Schüttguts von der Schüttguthalde 12. Der Böschungswinkel ist beispielsweise abhängig von der Korngröße und der Feuchte des Materials. Die Umlenkrollenachse 26a der Umlenkrolle, ist beispielsweise parallel zur Schneidkante 28 des Aktivierungselements 24. Vorzugsweise weist die Rotationsachse einen Winkel zur Horizontalen von etwa 20°- 45°, insbesondere 30°-40°, vorzugsweise etwa 37° auf.

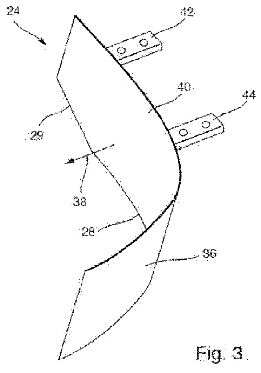

Fig. 3 zeigt ein weiteres Ausführungsbeispiel eines Förderelements 24. Das Förderelement 24 weist eine Schnittkante 28 auf, die in Richtung der Stirnfläche 22 der Schüttguthalde 12 weist. Zudem weißt das Förderelement eine weitere Schnittkante 29 aus die zur Schnittkante 28 abgewinkelt angeordnet ist. Vorzugsweise beträgt der Winkel zwischen diesen beiden Schnittkanten 8 bis 25°. Die geometrische Gestaltung der Schnittkanten 28 und 29 ermöglicht die Abbaufläche der Schüttguthalde so zu formen, dass ein abrupter Übergang, insbesondere eine Unterschneidung der Böschung, vermieden wird. Hierdurch wird das Risiko, dass das Material, welches überhalb der Schnittfläche angeordnet ist, die Böschung herunter rutscht, reduziert.

Gegenüberliegend der Schneidkante 29 weist das Förderelementselement 24 ein Mitnehmerelement 36 auf, das vorzugsweise einstückig mit dem Förderelement 24 ausgebildet ist und sich vorzugsweise in Förderrichtung 38 des Förderelements 24 erstreckt. Das Förderelement 24 weist auch einen sich im Wesentlichen orthogonal zu der Förderrichtung 38 erstreckenden Bereich 40 auf, der die Schneidkante 28 und 28a aufweist und mittels Befestigungselementen 42, 44 an dem Transportmittel 26, insbesondere einer oder zwei Ketten, angebracht ist.

### Bezugszeichenliste

- 10: Böschungsräumungssystem
- 11: Mischbett
- 12: Schüttguthalde
- 13: Schüttgutschicht
- 14: Zentralsäule
- 15: Hydraulikzylinder
- 16: Ausleger
- 18: Bandfördereirichtung
- 20: Fördereinrichtung
- 22: Stirnfläche der Schüttguthalde
- 24: Förderelemente
- 26: Transportmittel
- 28: Schnittkante des Förderelements
- 29: Schnittkante des Förderelements
- 30: Befestigungsmittel
- 31: Tragarm
- 32: Umlenkrolle
- 34: Seil
- 36: Mitnehmerelement
- 38: Förderrichtung
- 40: Bereich des Förderelements
- 42: Befestigungselement
- 44: Befestigungselement
- 46: Zentralschurre

- 14a: Rotationsachse der Zentralsäule
- 20a: Schwenkachse der Fördereinrichtung
- 16a: Schwenkachse des Auslegers
- 26a: Umlenkrollenachse
- 20b: Längsachse der Fördereinrichtung

## Patentansprüche

1. Verfahren zum Betreiben eines Böschungsräumungssystems (10) eines Mischbetts, insbesondere eines Rundmischbettes (11) zum Abbau von Rohmaterialien einer teilkreisförmigen Schüttguthalde (12), die eine Stirnfläche (22) aufweist,
wobei das Schüttgut mittels einer an einer vertikalen Zentralsäule (14) angebrachten Fördereinrichtung (20) in Richtung der Zentralsäule (14) transportiert wird und wobei
die Fördereinrichtung (20) eine Mehrzahl von an einem umlaufenden Transportmittel (26) angebrachten Förderelementen (24) aufweist, **dadurch gekennzeichnet, dass** die Förderelemente (24) zum Abbau des Schüttguts in die Stirnfläche (22) der Schüttguthalde (12) eingreifen und die Fördereinrichtung (20) entlang der Stirnfläche (22) der Schüttguthalde (12) bewegt wird.

2. Verfahren nach Anspruch 1, wobei die Fördereinrichtung (20) kontinuierlich entlang der vertikalen und horizontalen Erstreckung der Stirnfläche (22) der Schüttguthalde (12) bewegt wird.

3. Verfahren nach einem der vorangehenden Ansprüche, wobei die Mittelachse der Zentralsäule (14) eine Rotationsachse (14a) bildet und der Anstellwinkel (γ) der Fördereinrichtung (20) zur Rotationsachse (14a) bei der Bewegung der Fördereinrichtung (20) entlang der Stirnfläche (22) einstellbar ist.

4. Verfahren nach einem der vorangehenden Ansprüchen, wobei die Fördereinrichtung (20) zum Abbau des Schüttguts an der Stirnfläche (22) der Schüttguthalde (12) gleichzeitig eine Rotationsbewegung um die Rotationsachse (14a) und eine Schwenkbewegung um eine zu der Rotationsachse (14a) vorzugsweise orthogonalen Schwenkachse (20a) ausführt.

5. Verfahren nach einem der vorangehenden Ansprüche, wobei die Förderelemente (24) jeweils eine Schnittkannte (28) aufweisen, die beim Abbau des Schüttguts in die Stirnfläche (22) der Schüttguthalde (12) eingreifen.

6. Verfahren nach einem der vorangehenden Ansprüche, wobei zumindest ein Förderelement (24) derart in die Stirnfläche (22) der Schüttguthalde (12) eingreift, dass die Schnittkannte (28) des Förderelements (24) einen Winkel zur Horizontalen aufweist, der geringer ist als der Böschungswinkel der Schüttguthalde (12).

7. Böschungsräumungssystem (10) eines Mischbetts (10) zum Abbau von Schüttgut an einer Stirnfläche (22) einer Schüttguthalde (12) aufweisend
eine sich im Wesentlichen vertikal erstreckende Zentralsäule (14),
eine Fördereinrichtung (20) zum Transport von Schüttgut in Richtung der Zentralsäule (14), die mit einem Ende an der Zentralsäule (14) angebracht ist und eine Mehrzahl von Förderelementen (24) aufweist und wobei
die Förderelemente (24) an einem umlaufenden Transportmittel (26) angebracht sind, das sich entlang der Fördereinrichtung (20) erstreckt,
**dadurch gekennzeichnet, dass**
die Förderelemente (24) derart an dem Transportmittel (26) angebracht sind,
dass sie zum Abbau des Schüttguts in die Stirnfläche (22) der Schüttguthalde (12) eingreifen und die Fördereinrichtung (20) entlang der Stirnfläche (22) der Schüttguthalde (12) bewegbar angebracht ist
wobei das Transportmittel (26) um eine zumindest teilweise in vertikaler Richtung weisende Achse umlaufend angebracht ist.

8. Böschungsräumungssystem (10) nach Anspruch 7, wobei die Fördereinrichtung (20) derart an der Zentralsäule (14) angebracht ist, dass sie entlang der vertikalen und horizontalen Erstreckung der Stirnfläche (22) der Schüttguthalde (12) bewegbar ist.

9. Böschungsräumungssystem (10) nach Anspruch 7 oder 8, wobei die Fördereinrichtung (20) derart an der Zentralsäule (14) angebracht ist, dass sie zum Abbau des Schüttguts an der Stirnfläche (22) der Schüttguthalde (12) gleichzeitig um die Rotationsachse (14a) rotierbar und um eine zu der Rotationsachse (14a) orthogonalen Schwenkachse (20a) schwenkbar ist.

10. Böschungsräumungssystem (10) nach einem der Ansprüche 7 bis 9, wobei jedes Förderelement (24) eine Schnittkannte (28) zum Eingriff in eine Stirnfläche (22) der Schüttguthalde (12) aufweist und wobei die Schnittkannte (28) eine Winkel β zur Horizontalen von etwa 20°- 45°, vorzugsweise 30° - 40°, insbesondere 37° aufweist.

11. Böschungsräumungssystem (10) nach einem der Ansprüche 7 bis 10, wobei die Schnittkante (28) eines Förderelements (24) einen Winkel zur Horizontalen aufweist, der geringer ist als der Böschungswinkel der Schüttguthalde (12).

12. Böschungsräumungssystem (10) nach einem der Ansprüche 7 bis 11, wobei die Förderelemente (24) als Schaufeln oder Eimer zur Aufnahme von Schüttgut ausgebildet sind.

13. Böschungsräumungssystem (10) nach einem der Ansprüche 7 bis 12, wobei zumindest ein Förderelement (24) einen in Förderrichtung (38) des Schüttguts weisenden Bereich (36) und einen orthogonal zur Förderrichtung (38) des Schüttguts weisenden Bereich (40) aufweist.

14. Böschungsräumungssystem nach einem der Ansprüche 7 - 13, wobei das Förderelement (24) zwei Schnittkanten (28, 29) aufweist, die in einem Winkel zwischen 10° und 30° zueinander angeordnet sind.

## Claims

1. Method for operating a slope clearing system (10) of a blending bed, in particular of a circular blending bed (11) for removing raw materials of a semicircular bulk material stockpile (12), which has an end face (22),
wherein the bulk material is transported in the direction of a central post (14) by means of a conveying device (20) attached to the vertical central post (14), and wherein
the conveying device (20) has a plurality of conveying elements (24) attached to a circulating transport means (26), **characterized in that** the conveying elements (24) engage in the end face (22) of the bulk material stockpile (12) to remove the bulk material and the conveying device (20) is moved along the end face (22) of the bulk material stockpile (12).

2. Method according to claim 1, wherein the conveying device (20) is moved continuously along the vertical and horizontal extension of the end face (22) of the bulk material stockpile (12).

3. Method according to one of the preceding claims, wherein the central axis of the central post (14) forms an axis of rotation (14a) and the angle of attack (γ) of the conveying device (20) to the axis of rotation (14a) is adjustable during the movement of the conveying device (20) along the end face (22).

4. Method according to one of the preceding claims, wherein the conveying device (20) simultaneously performs a rotational movement about the axis of rotation (14a) and a pivoting movement about a pivot axis (20a) preferably orthogonal to the axis of rotation (14a) in order to remove the bulk material at the end face (22) of the bulk material stockpile (12).

5. Method according to one of the preceding claims, wherein the conveying elements (24) each have a cutting edge (28) which engages in the end face (22) of the bulk material stockpile (12) when the bulk material is removed.

6. Method according to one of the preceding claims, wherein at least one conveying element (24) engages in the end face (22) of the bulk material stockpile (12) in such a way that the cutting edge (28) of the conveying element (24) has an angle to the horizontal which is smaller than the angle of slope of the bulk material stockpile (12).

7. Slope clearing system (10) of a blending bed (10) for removing bulk material at an end face (22) of a bulk material stockpile (12), comprising
a substantially vertically extending central post (14),
a conveying device (20) for transporting bulk material in the direction of the central post (14), wherein the conveying device (20) is attached at one end to the central post (14) and has a plurality of conveying elements (24), and wherein
the conveying elements (24) are attached to a circulating transport means (26) which extends along the conveying device (20),
**characterized in that**
the conveying elements (24) are attached to the transport means (26) in such a way that they engage in the end face (22) of the bulk material stockpile (12) in order to remove the bulk material, and the conveying device (20) is attached such that it can move along the end face (22) of the bulk material stockpile (12)
the transport means (26) being mounted so as to rotate about an axis pointing at least partially in the vertical direction.

8. Slope clearing system (10) according to claim 7, wherein the conveyor device (20) is mounted on the central post (14) in such a way that it is movable along the vertical and horizontal extent of the end face (22) of the bulk material stockpile (12).

9. Slope clearing system (10) according to claim 7 or 8, wherein the conveying device (20) is attached to the central post (14) in such a way that it can simultaneously be rotated about the axis of rotation (14a) and pivoted about a pivot axis (20a) orthogonal to the axis of rotation (14a) in order to remove the bulk material from the end face (22) of the bulk material stockpile (12).

10. Slope clearing system (10) according to one of claims 7 to 9, wherein each conveying element (24) has a cutting edge (28) for engaging an end face (22) of the bulk material stockpile (12) and wherein the cutting edge (28) has an angle β to the horizontal of about 20°- 45°, preferably 30° - 40°, in particular 37°.

11. Slope clearing system (10) according to one of claims 7 to 10, wherein the cutting edge (28) of a conveying element (24) has an angle to the horizontal which is smaller than the angle of slope of the bulk material stockpile (12).

12. Slope clearing system (10) according to one of claims 7 to 11, wherein the conveying elements (24) are designed as shovels or buckets for receiving bulk material.

13. Slope clearing system (10) according to one of claims 7 to 12, wherein at least one conveying element (24) has a region (36) pointing in the conveying direction (38) of the bulk material and a region (40) pointing orthogonally to the conveying direction (38) of the bulk material.

14. Slope clearing system according to one of claims 7 - 13, wherein the conveying element (24) has two cutting edges (28, 29) which are arranged at an angle between 10° and 30° to each other.

## Revendications

1. Procédé de fonctionnement d'un système de déblaiement (10) d'un lit de mélange, en particulier d'un lit de mélange circulaire (11) pour l'extraction de matières premières d'un stock de matières en vrac semi-circulaire (12), qui présente une face d'extrémité (22),
dans lequel le produit en vrac est transporté en direction d'un poteau central (14) au moyen d'un dispositif de transport (20) fixé au poteau central vertical (14), et dans lequel
le dispositif de transport (20) comporte plusieurs éléments de transport (24) fixés à un moyen de transport en circulation (26), **caractérisé en ce que** les éléments de transport (24) s'engagent dans la face d'extrémité (22) du stock de matériau en vrac (12) pour retirer le matériau en vrac et le dispositif de transport (20) est déplacé le long de la face d'extrémité (22) du stock de matériau en vrac (12).

2. Procédé selon la revendication 1, dans lequel le dispositif de transport (20) est déplacé en continu le long de l'extension verticale et horizontale de la face frontale (22) du stock de matières en vrac (12).

3. Procédé selon l'une des revendications précédentes, dans lequel l'axe central du poteau central (14) forme un axe de rotation (14a) et l'angle d'attaque (γ) du dispositif de transport (20) par rapport à l'axe de rotation (14a) est réglable pendant le déplacement du dispositif de transport (20) le long de la face d'extrémité (22).

4. Procédé selon l'une des revendications précédentes, dans lequel le dispositif de transport (20) effectue simultanément un mouvement de rotation autour de l'axe de rotation (14a) et un mouvement de pivotement autour d'un axe de pivotement (20a) de préférence orthogonal à l'axe de rotation (14a) afin de retirer le matériau en vrac au niveau de la face d'extrémité (22) du stock de matériau en vrac (12).

5. Procédé selon l'une des revendications précédentes, dans lequel les éléments de transport (24) ont chacun un bord tranchant (28) qui s'engage dans la face d'extrémité (22) du stock de matériau en vrac (12) lorsque le matériau en vrac est enlevé.

6. Procédé selon l'une des revendications précédentes, dans lequel au moins un élément de transport (24) s'engage dans la face frontale (22) de la pile de matériaux en vrac (12) de telle sorte que le bord tranchant (28) de l'élément de transport (24) présente un angle par rapport à l'horizontale qui est inférieur à l'angle d'inclinaison de la pile de matériaux en vrac (12).

7. Système de déblaiement de pente (10) d'un lit de mélange (10) pour enlever les matières en vrac sur une face frontale (22) d'un stock de matières en vrac (12), comprenant
un poteau central (14) s'étendant sensiblement à la verticale,
un dispositif de transport (20) pour transporter les matières en vrac en direction du montant central (14), dans lequel le dispositif de transport (20) est fixé à une extrémité du montant central (14) et comporte plusieurs éléments de transport (24), et dans lequel
les éléments de transport (24) sont fixés à un moyen de transport en circulation (26) qui s'étend le long du dispositif de transport (20),
**caractérisé par le fait que**
les éléments de transport (24) sont fixés au moyen de transport (26) de telle sorte qu'ils s'engagent dans la face frontale (22) du stock de produits en vrac (12) afin d'extraire les produits en vrac, et le dispositif de transport (20) est fixé de telle sorte qu'il peut se déplacer le long de la face frontale (22) du stock de produits en vrac (12)
le moyen de transport (26) est monté de manière à tourner autour d'un axe orienté au moins partiellement dans la direction verticale.

8. Système de déblaiement de pente (10) selon la revendication 7, dans lequel le dispositif de transport (20) est monté sur le poteau central (14) de manière à pouvoir se déplacer le long de l'étendue verticale et horizontale de la face d'extrémité (22) du tas de matériaux en vrac (12).

9. Système de déblaiement de pente (10) selon la revendication 7 ou 8, dans lequel le dispositif de transport (20) est fixé au poteau central (14) de manière à pouvoir simultanément tourner autour de l'axe de rotation (14a) et pivoter autour d'un axe de pivotement (20a) orthogonal à l'axe de rotation (14a) afin d'enlever le matériau en vrac de la face frontale (22) du stock de matériau en vrac (12).

10. Système de déblaiement de pente (10) selon l'une des revendications 7 à 9, dans lequel chaque élément de transport (24) a un bord tranchant (28) pour engager une face d'extrémité (22) du stock de matériau en vrac (12) et dans lequel le bord tranchant (28) a un angle ß par rapport à l'horizontale d'environ 20° - 45°, de préférence 30° - 40°, en particulier 37°.

11. Système de déblaiement de pente (10) selon l'une des revendications 7 à 10, dans lequel le bord tranchant (28) d'un élément de transport (24) présente un angle par rapport à l'horizontale qui est inférieur à l'angle de pente du tas de matériaux en vrac (12).

12. Système de déblaiement des pentes (10) selon l'une des revendications 7 à 11, dans lequel les éléments de transport (24) sont conçus comme des pelles ou des godets pour recevoir des matériaux en vrac.

13. Système de déblaiement de pente (10) selon l'une des revendications 7 à 12, dans lequel au moins un élément de transport (24) présente une zone (36) orientée dans la direction de transport (38) du matériau en vrac et une zone (40) orientée orthogonalement à la direction de transport (38) du matériau en vrac.

14. Système de déblaiement de pente selon l'une des revendications 7 à 13, dans lequel l'élément de transport (24) a deux bords coupants (28, 29) qui sont disposés à un angle compris entre 10° et 30° l'un par rapport à l'autre.
